# EUROPÄISCHE PATENTSCHRIFT

(11) **EP 2 697 787 B1**
(45) Veröffentlichungstag und Bekanntmachung des Hinweises auf die Patenterteilung: **18.09.2019**
(21) Anmeldenummer: 13709049.4
(22) Anmeldetag: 13.02.2013
(51) Int. Cl.: G07G 1/00, A47F 9/04

(54) **KASSENSYSTEMANORDNUNG**
POINT-OF-SALE SYSTEM ASSEMBLY
ENSEMBLE DE SYSTÈME DE CAISSE

(30) Priorität: 17.02.2012 DE 102012101267
(43) Veröffentlichungstag der Anmeldung: 19.02.2014
(73) Patentinhaber: Wincor Nixdorf International GmbH, 33106 Paderborn (DE)
(72) Erfinder: BAITZ, Günter, 13629 Berlin (DE); WIDMAIER, Dominik, 10715 Berlin (DE)
(86) Internationale Anmeldenummer: PCT/EP2013/052827
(87) Internationale Veröffentlichungsnummer: WO 2013/120875

(56) Entgegenhaltungen:
- EP-A1- 1 746 547
- EP-A1- 2 177 135
- DE-A1-102008 010 642
- US-A1- 2008 054 071
- US-A1- 2011 253 778

## Beschreibung

Die Erfindung betrifft eine Kassensystemanordnung, die eine Warenerfassungsvorrichtung zum Erfassen von ausgewählten Waren hat. Die Warenerfassungseinrichtung hat einen Scanner zum Erfassen der Waren sowie ein erstes Transportband zum Transport der auf das erste Transportband aufgelegten Waren an dem Scanner vorbei. Ferner umfasst die Kassensystemanordnung eine Packvorrichtung, die mindestens zwei voneinander getrennte Warenaufhahmeeinheiten zur Aufnahme der mithilfe des Scanners erfassten Waren und zum Bereitstellen der Waren zur Entnahme durch einen Kunden umfasst. Solche Kassensystemanordnungen sind aus Verkaufsstellen, insbesondere aus Einzelhandelsmärkten und aus Großmärkten bekannt, in denen jeweils eine Vielzahl von Kunden jeweils eine Vielzahl von ausgewählten Waren kaufen, die von einer Kassensystemanordnung erfasst und dem Kunden nach dem Erfassen zur Entnahme bereitgestellt werden. Bekannte Kassensystemanordnungen sind insbesondere aus den Dokumenten EP 2386227 A1, DE 10312421 B3 und EP 0338376 B1 bekannt.

Aus Dokument EP 2177135 A1 ist eine automatische Registrierkasse bekannt mit einem Warenablagebereich, einem Bereich zum Identifizieren der zugeführten Waren und einem Bereich zum Ablegen der identifizierten Waren, in dem wenigstens zwei Längsriemen zum Zuführen der benachbart angeordneten Waren vorgesehen sind, wobei die Längsförderbänder erste Enden zum Ablegen der Güter und zweite Enden umfassen, die jeweils mit mindestens zwei Querförderbändern verbunden sind.

Allgemein wird zwischen Kassensystemanordnungen, bei denen die Waren durch eine Kassenkraft erfasst und bei denen diese Kassenkraft den Bezahlvorgang abwickelt, und sogenannten Self Checkout Systemen, bei denen die Warenerfassung mithilfe eines Scanners automatisch oder durch den Kunden erfolgt und der Bezahlvorgang ebenfalls ohne Involvierung einer Kassenkraft erfolgt. Diese bekannten Kassensystemanordnungen haben als Packvorrichtung einen Packtisch, der am Ende eines Transportbands angeordnet ist, das die Waren vom Scannbereich bis zum Packtisch transportiert. Ein solcher Packtisch kann mindestens zwei voneinander getrennte Warenaufnahmeeinheiten haben, so dass die Waren von zwei nacheinander an der Kassensystemanordnung abzufertigenden Kunden getrennt aufgenommen werden können.

Zum automatischen Erfassen von ausgewählten Waren sind sogenannten Tunnelscanner bekannt, bei denen die Waren auf einem Transportband entlang des um das Transportband herum angeordneten Scanners transportiert werden, so dass die Waren mithilfe des Tunnelscanners erfasst werden können. Übliche Tunnelscanner haben ein erstes Transportband, das die Waren in den Scannbereich hineintransportiert und das als Vorlaufband bezeichnet wird, und ein zweites Transportband, das die Waren aus dem Scannbereich heraustransportiert und als Rücklaufband bezeichnet wird. Zwischen den beiden Transportbändern ist eine Lücke, so dass die Scannanordnung die durch den Scannbereich transportierten Waren in diese Lücke auch von unten erfassen kann.

Insbesondere bei Kassensystemanordnungen mit Tunnelscannern ist eine hohe Flexibilität bei der Ausgestaltung der beiden zumindest teilweise im Scannbereich angeordneten Transportbändern sowie bei der Ausgestaltung der Packvorrichtung wünschenswert um die Kassensystemanordnung einfach an örtliche Gegebenheiten und die Anforderungen der jeweiligen Verkaufsstellen erforderlich. Die Ausgestaltung des Packkonzepts der Kassensystemanordnung ist dabei vom geplanten Prozess des jeweiligen Groß- oder Einzelhandels abhängig und ist an dessen Bedürfnisse anzupassen. Gerade bei hohen Geschwindigkeiten des Scanners sind die Packvorrichtungen oft der Flaschenhals des gesamten Systems, da nicht ausreichend Platz für mehrere Kunden mit unterschiedlich großen Warenkörben zur Verfügung stehen. Zusätzlich müssen meist mehrere Kassensystemanordnungen an dem zur Verfügung stehenden Platz angepasst werden.

Aufgabe der Erfindung ist es, eine Kassensystemanordnung anzugeben, die einfach an die jeweiligen Anforderungen anpassbar ist.

Diese Aufgabe wird durch eine Kassensystemanordnung mit den Merkmalen des Anspruchs 1 gelöst. Vorteilhafte Weiterbildungen sind in den abhängigen Ansprüchen angegeben.

Die Erfindung betrifft ferner, dass zwischen dem ersten Transportband und der Packvorrichtung eine Transportvorrichtung vorgesehen ist, die ein zweites Transportband umfasst mit dessen Hilfe die gescannten Waren nach dem Transport durch das erste Transportband zu den Warenaufnahmeeinheiten der Packvorrichtung transportierbar sind. Dadurch ist eine flexible Anordnung sowie eine flexible Möglichkeit der Anpassung der Warenaufnahmeeinheiten an die Kundenbedürfnisse und an die Bedürfnisse des jeweiligen Groß- oder Einzelhandels der jeweiligen Marktverkaufsstellen, in der die Kassensystemanordnung aufgestellt werden soll, auf einfache Art und Weise möglich. Insbesondere durch das Vorsehen des zweiten Transportbandes kann sowohl die Anordnung der Packvorrichtung in Bezug auf die Warenerfassungsvorrichtung als auch die Größe und die Anzahl der Warenaufnahmeeinheiten der Packvorrichtung einfach an die Bedürfnisse des Marktes und örtlichen Gegebenheiten angepasst werden, ohne den Aufbau der Warenerfassungsvorrichtung ändern zu müssen.

Die Erfindung betrifft ferner, dass es vorteilhaft ist, wenn die Warenerfassungsvorrichtung, die Packvorrichtung und die Transportvorrichtung als getrennte Module ausgebildet sind. Dadurch ist eine einfache und kostengünstige Anpassung an die örtlichen Gegebenheiten und die Bedürfnisse des Marktes sehr einfach möglich.

Die Erfindung betrifft ferner, dass es besonders vorteilhaft ist, wenn die Module mithilfe von vorgesehenen Schnittstellen miteinander über lös- und wiederherstellbare Verbindungen miteinander verbindbar sind. Dadurch können unterschiedliche Module einfach zu einer Kassensystemanordnung verbunden werden. Auch ist durch diese lös- und wiederherstellbaren Verbindungen eine einfache Umkonfiguration der jeweiligen Kassensystemanordnung, insbesondere ein einfacher Austausch der Packvorrichtung und der Transportvorrichtung, möglich, um diese an gegebenenfalls geänderter Anforderung des Marktes anzupassen. Auch kann die Warenerfassungsvorrichtung gegen eine andere Warenerfassungsvorrichtung mit einem anderen Funktionsumfang oder einer anderen Erfassungsgeschwindigkeit einfach ausgetauscht werden. Auch im Servicefall können so lediglich einzelne Module gegen baugleiche Module ausgetauscht werden.

Die Erfindung betrifft ferner, dass es vorteilhaft ist, wenn das erste Transportband derart angetrieben ist, dass auf ihm liegende Waren in einer ersten Richtung transportiert werden, und wenn das zweite Transportband derart angetrieben ist, dass auf ihm aufliegende Waren in eine zweite Richtung transportiert werden. Die Ausrichtung der Transportvorrichtung relativ zur Warenerfassungsvorrichtung kann zum Verändern der Ausrichtung der ersten und zweiten Richtung relativ zueinander veränderbar sein. Dadurch ist eine flexible Anordnung der Warenerfassungsvorrichtung relativ zur Packvorrichtung und zur Transportvorrichtung möglich, so dass die Kassensystemanordnung einfach an die Anforderungen des jeweiligen Marktes angepasst werden kann. Bei dieser Ausführungsform können die Warenerfassungsvorrichtung und die Transportvorrichtung in einer ersten Betriebsposition derart angeordnet sein, dass die erste Richtung und die zweite Richtung gleichgerichtet sind. Dabei sind das erste Transportband und das zweite Transportband vorzugsweise hintereinander angeordnet. Zusätzlich oder alternativ ist es bei dieser Ausführungsform möglich, dass die Warenerfassungsvorrichtung und die Transportvorrichtung in einer zweiten Betriebsposition derart angeordnet sind, dass die erste Richtung und die zweite Richtung orthogonal zueinander sind. Dadurch ist eine flexible Anordnung der Warenerfassungsvorrichtung relativ zur Transportvorrichtung abhängig von den Anforderungen des jeweiligen Marktes möglich.

Erfindungsgemäß ist die Packvorrichtung entlang der Längsrichtung des zweiten Transportbandes an einer Seite der Transportvorrichtung angeordnet. Dadurch können mithilfe geeigneter Umlenkelemente die mithilfe des zweiten Transportbandes transportierten Waren einfach in eine der Warenaufnahmeeinheiten gelenkt werden, die dem Kunden dort zur Entnahme bereitgestellt werden.

Besonders vorteilhaft ist es, wenn die Packvorrichtung mehrere miteinander verbindbare und voneinander trennbare Untermodule umfasst, wobei jedes Untermodul mindestens eine Warenaufnahmeeinheit umfasst. Dadurch können unterschiedliche Anzahlen der Untermodule zu einer Packvorrichtung kombiniert werden, die mit einem entsprechend langen Transportband kombinierbar ist. Bei dieser Ausführungsform müssen für Kassensysteme mit unterschiedlichen Anforderungen lediglich mindestens ein Typ der Warenerfassungsvorrichtung, mindestens ein Typ eines Untermoduls und mehrere Typen von Transportvorrichtungen vorgesehen sein, um die Kassensystemanordnung an unterschiedliche Anforderungen an die Anzahl und die Anordnung von mehreren Warenaufnahmeeinheiten möglich ist.

Bei einer bevorzugten Ausführungsform sind die Warenaufhahmeeinheiten bezogen auf die zweite Richtung hintereinander angeordnet. Dadurch können die Waren einfach vom zweiten Transportband in eine beliebige ausgewählte Warenaufhahmeeinheit aus geleitet werden. Auch kann durch eine solche Anordnung zwischen einer Kundenseite und einer Bedienerseite unterschieden werden, wenn bei der Kassensystemanordnung eine Bedienperson zum Unterstützen der Kunden und/oder zum Kassieren des ermittelten Geldbetrages vorgesehen ist.

Die Erfindung betrifft ferner, dass es vorteilhaft ist, wenn die mindestens zwei Warenaufhahmeeinheiten der Packvorrichtung durch eine bewegbare Trennwand voneinander getrennt sind, wobei durch Bewegen der Trennwand das Aufnahmevolumen der Warenaufnahmeeinheiten veränderbar ist. Auch sind Ausführungsformen möglich, bei denen die Trennwand soweit verschiebbar ist oder derart absenkbar ist, dass mindestens zwei Aufnahmeeinheiten einen gemeinsamen Warenaufnahmebereich bereitstellen. Durch diese Ausführungsformen ist eine flexible Nutzung der Warenaufnahmebereiche für unterschiedlich große Warenkörbe der Kunden möglich. Die Warenaufhahmeeinheiten der

Packvorrichtung können dadurch auch durch eine einmalige Konfiguration der Warenaufnahmebereiche grundsätzlich an die Erfordernisse des Marktes angepasst werden. Dabei können insbesondere unterschiedlich große Warenaufnahmebereiche für unterschiedlich große Warenkörbe der Kunden bereitgestellt werden, die dann von einer Bedienperson oder von einer Steuereinheit auf geeigneter Art und Weise ausgewählt werden.

Besonders vorteilhaft ist es, wenn die Warenerfassungsvorrichtung als Scanner einen Tunnelscanner hat. Ein solcher Tunnelscanner kann insbesondere mithilfe von Spiegelanordnungen mehrere Seiten der durch den Scannbereich transportierten Waren erfassen und dort befindliche Barcodes und/oder andere Merkmale der Waren erfassen. Insbesondere kann ein solcher Tunnelscanner den gesamten Umfang einer Ware um deren Transportrichtung durch den Scannbereich hindurch herum abtasten, d.h. alle vier Seiten einer rechteckigen durch den Scannbereich transportierten Ware abtasten, die um die Transportrichtung herum angeordnet sind. Durch geeignete Spiegelanordnungen können auch die die Transportrichtung schneidenden Seiten der rechteckigen Ware (d.h. deren Vorderseite und deren Rückseite in Transportrichtung gesehen) erfasst werden, so dass eine durch den Scannbereich des Tunnelscanners transportierte Ware von allen Seiten erfasst werden kann. Wie bereits in der Beschreibungseinleitung in Verbindung mit dem Stand der Technik beschrieben, kann ein Tunnelscanner dazu ein Vorlaufband zum Transport der Waren in den Scannbereich und ein Rücklaufband zum Transport der Waren aus dem Scannbereich haben, wobei das Rücklaufband bei der Verwendung eines Tunnelscanners in Verbindung mit der erfindungsgemäßen Kassensystemanordnung das als erstes Transportband bezeichnete Transportband ist. Alternativ oder zusätzlich kann der Scanner eine RFID-Leseinheit haben, die auf den Waren befindliche RFID-Transponder bzw. RFID-Tags lesen und ausgehend von den gelesenen Daten Informationen über die zu erfassenden Waren erhält.

Ferner ist es vorteilhaft, wenn das erste Transportband und das zweite Transportband derart relativ zueinander angeordnet sind, dass sie sich in einem Übergangsbereich, in dem die Waren von dem ersten Transportband an das zweite Transportband übergeben werden, teilweise überlappen. Dadurch ist ein sicherer Transport der Waren vom ersten Transportband auf das zweite Transportband möglich, ohne dass es zu einem Warenstau im Übergangsbereich kommt.

Bei einer weiteren vorteilhaften Ausführungsform sind das erste Transportband und das zweite Transportband derart relativ zueinander angeordnet, dass in einem Übergangsbereich, in dem die Waren von dem ersten Transportband an das zweite Transportband übergeben werden, das zweite Transportband tiefer als das erste Transportband angeordnet ist. Insbesondere ist das zweite Transportband um den Umlenkradius des ersten Transportbandes im Übergangsbereich tiefer als das erste Transportband angeordnet. Dadurch kann nur ein geringer Abstand zwischen dem ersten Transportband und zweiten Transportband im Übergangsbereich vorgesehen werden, so dass die Gefahr, dass Waren in diesen Übergangsbereich zwischen das erste und das zweite Transportband gelangen und durch die Rotation des ersten und/oder zweiten Transportbandes beschädigt werden oder dass es im Übergangsbereich zu einem Warenstau kommt, verringert ist. Auch wird durch eine relativ geringe Höhendifferenz ein schonender Umgang mit den erfassten Waren gewährleistet. Durch die Höhendifferenz fallen die erfassten Waren von dem ersten Transportband auf das zweite Transportband. Die Bänder können bei dieser Ausführungsform und bei allen anderen Ausführungsformen als angetriebene endlose Bänder ausgeführt sein, die um jeweils mindestens zwei Umlenkrollen geführt sind. Dabei kann das zweite Band um mindestens den Radius der nahe dem zweiten Transportband angeordneten Umlenkrolle des ersten Transportbandes tiefer angeordnet sein. Vorzugsweise um den Betrag der Summe des Radius der Umlenkrolle und der Banddicke des ersten Transportbandes. Dadurch wird ein zuverlässiger Übergang der erfassten Waren vom ersten Transportband auf das zweite Transportband ermöglicht.

Bei einer weiteren vorteilhaften Ausführungsform sind das erste Transportband und das zweite Transportband quer zueinander angeordnet. In dem Übergangsbereich in dem durch die Transportbänder gebildeten Innenwinkel ist mindestens eine um ihre Längsachse drehbar gelagerte Rolle zum Umlenken der Waren bei der Übergabe von dem ersten Transportband auf das zweite Transportband vorgesehen. Alternativ zu einer frei drehbaren Rolle kann die Rolle auch mithilfe einer Antriebseinheit angetrieben sein, wobei die Umfangsgeschwindigkeit der angetriebenen Rolle vorzugsweise der Transportgeschwindigkeit des ersten und/oder zweiten Bandes, d.h. deren Umlaufgeschwindigkeit, entspricht. Ferner ist es vorteilhaft, wenn die Längsachse der Rolle orthogonal zu den Transportebenen der Bänder ist. Dadurch ist eine einfache Umlenkung der Waren um die Rolle beim Übergang vom ersten Transportband auf das zweite Transportband möglich. Allgemein beziehen sich die angegebenen Ausrichtungen der Bänder jeweils auf deren Längsachse.

Ferner ist es vorteilhaft, wenn die Warenerfassungsvorrichtung und die Transportvorrichtung derart angeordnet sind, dass die Längsachsen der beiden Transportbänder gleichgerichtet sind, und wenn der Scannbereich des Scanners am Ende des ersten Transportbandes angeordnet ist, so dass die Waren direkt nach ihrer Erfassung durch den Scanner vom ersten Transportband an das zweite Transportband übergeben werden. Dadurch ist eine besonders kompakte Bauweise möglich, da das erste Transportband bereits am Ende des Scannbereichs endet. Alternativ dazu kann das erste Band über das Tunnelende hinausragen und die Waren an dem Scanner vorbeitransportieren. Jedoch kann wie bereits erwähnt die Warenerfassungsvorrichtung auch ein Vorlaufband und ein Rücklaufband umfassen, wobei das Vorlaufband die Waren in den Scannbereich hineintransportiert und das Rücklaufband die Waren aus dem Scannbereich heraustransportiert.

Besonders vorteilhaft ist es, wenn die Kassensystemanordnung zusätzlich ein Regal zum Anbieten von Waren hat, das Regal an einer ersten Längsseite der Transportvorrichtung angeordnet ist und wenn die Packvorrichtung an einer der ersten Seite gegenüberliegenden zweiten Seite der Transportvorrichtung angeordnet ist. Besonders vorteilhaft ist es, wenn das Regal mit einem Abstand zur Transportvorrichtung und die Packvorrichtung direkt angrenzend an die Transportvorrichtung angeordnet sind. In dem Regal können insbesondere für Kunden reservierte Waren oder vom Kunden beim Betreten des Marktes abgegebene Taschen aufbewahrt werden. Alternativ oder zusätzlich können in diesem Regal auch Waren, insbesondere sehr hochwertige Waren, angeboten werden. Ferner ist es besonders vorteilhaft, wenn die Warenaufnahmeeinheiten als Packmulden ausgebildet sind, die abschüssig angeordnet sind, so dass die Waren in den abschüssigen Packmulden vom zweiten Transportband weggleiten können. Alternativ oder zusätzlich können die Packmulden tiefer als das zweite Transportband angeordnet sein. Damit werden die Waren auf einfache Art und Weise vom Transportband wegtransportiert und behindern nicht die Bewegung des Transportbandes.

Besonders vorteilhaft ist es, wenn Umlenkelemente zum wahlweisen Befüllen einer der mindestens zwei vorgesehenen Warenaufnahmeeinheiten mithilfe des zweiten Transportbandes transportierten Waren vorgesehen sind. Diese Umlenkelemente können weichenartige Elemente oder als Pusher ausgeführt sein. Ein solcher Pusher schiebt auf dem zweiten Transportpfad transportierte Waren durch eine aktive geführte Bewegung in einen Warenaufnahmebereich der Packvorrichtung hinein. Dadurch ist eine einfache Ausleitung der Waren vom zweiten Transportband in einen ausgewählten durch die Warenaufnahmeeinheiten bereitgestellten Warenaufnahmebereich einfach möglich.

Die Transportvorrichtung kann mindestens ein drittes Band zur Verlängerung des durch das zweite Transportband bereitgestellten Transportwegs haben. Dabei können mehrere Transportvorrichtungsmodule vorgesehen sein, die je ein Transportband umfassen und die über lös- und wiederherstellbare Verbindungen, insbesondere über eine vorgesehene Schnittstelle, miteinander verbindbar sind. Ferner kann die Kassensystemanordnung mindestens eine Anzeigeeinheit, mindestens einen Geldeingabe- und Geldausgabebereich, mindestens Bondrucker und/oder mindestens eine Kartenleseinheit umfassen, die vorzugsweise im Bereich der Transportvorrichtung, zumindest teilweise unterhalb des Transportbandes, angeordnet sind. Ferner ist bei einer vorteilhaften Ausführungsform die Laufrichtung des ersten Bandes umkehrbar, so dass Waren, die nicht erfolgreich mithilfe der Warenerfassungseinheit erfasst worden sind, dem Scanner der Warenerfassungseinheit nochmals zugeführt werden können.

Bei allen Ausführungsformen kann vorgesehen sein, dass eine Warenaufnahmeeinheit für von der Warenerfassungsvorrichtung nicht erfasste bzw. nicht gescannte Waren vorhanden ist, in die diese nicht erfassten bzw. nicht gescannten Waren mit Hilfe der Transportvorrichtung und ggf. mit Hilfe der Umlenkelemente transportiert werden. Vorzugsweise ist diese Warenaufnahmeeinheit von den weiteren Warenaufnahmeeinheiten entfernt angeordnet. Dadurch kann eine Separierung der nicht erfassten Waren von den korrekt erfassten Waren vorzugsweise automatisch erfolgen. Vorzugsweise ist durch eine geeignete entfernte Anordnung der Zugriff auf die in dieser entfernt angeordneten Warenaufnahmeeinheit befindlichen Waren durch eine Service- bzw. Kassenkraft gegenüber einem Zugriff auf die in den übrigen Warenaufnahmeeinheiten befindlichen Waren vereinfacht, wohingegen der Zugriff eines Kunden auf diese entfernt angeordnete Warenaufnahmeeinheit, in die die nicht erfassten Waren transportiert werden, gegenüber den übrigen Warenaufnahmeeinheiten, in die die erfassten und vom Kunden zu entnehmenden Waren transportiert werden, erschwert ist.

Sollte hingegen keine spezielle Warenaufnahmeeinheit für eine nachträgliche Separierung nicht erfasster Waren vorhanden sein, kann durch eine "Negativquittierung", welche insbesondere einen Ton mit niedriger Frequenz und/oder ein optisches Warnsignal, beispielsweise über ein Display oder eine insbesondere rote Signalleuchte, umfasst, auf die nicht erfassten Waren hingewiesen werden. Alternativ oder zusätzlich kann auch das Transportband der Transportvorrichtung nach einen Transport der Ware bis in einen Zugriffsbereich einer Service- oder Kassenkraft gestoppt werden, um den Zugriff auf die nicht erfasste Ware durch die Service- oder Kassenkraft zu ermöglichen. Dadurch kann der Kunde und/oder der Service- oder Kassenkraft auf einen Erfassungsfehler auf geeignete Weise aufmerksam gemacht werden. Durch diese "Negativquittierung" kann eine nicht erfasste Ware gezielt durch den Kunden und/oder Service- oder Kassenkraft manuell nacherfasst werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine Draufsicht auf eine Kassensystemanordnung gemäß einer ersten Ausführungsform;
- Figur 2: eine Vorderansicht der Kassensystemanordnung nach Figur 1;
- Figur 3: eine Seitenansicht der Kassensystemanordnung nach den Figuren 1 und 2;
- Figur 4: eine Rückansicht der Kassensystemanordnung nach den Figuren 1 bis 3;
- Figur 5: eine perspektivische Darstellung der Kassensystemanordnung nach den Figuren 1 bis 4;
- Figur 6: eine perspektivische Darstellung der Kassensystemanordnung nach den Figuren 1 bis 5 zusammen mit einer schematisch dargestellten Servicekraft und einem Regal;
- Figur 7: eine Transportvorrichtung und eine Packvorrichtung der Kassensystemanordnung nach den Figuren 1 bis 6;
- Figur 8: eine Detailansicht eines Ausschnitts des Übergangbereichs vom Transportband einer Warenerfassungsvorrichtung zum Transportband einer Transportvorrichtung der Kassensystemanordnung nach den Figuren 1 bis 7;
- Figur 9: die perspektivische Darstellung des Übergangbereichs zwischen dem ersten Transportband und dem zweiten Transportband nach Figur 8;
- Figur 10: eine Seitenansicht einer Kassensystemanordnung gemäß einer zweiten Ausführungsform;
- Figur 11: eine perspektivische Darstellung der Kassensystemanordnung nach Figur 10.

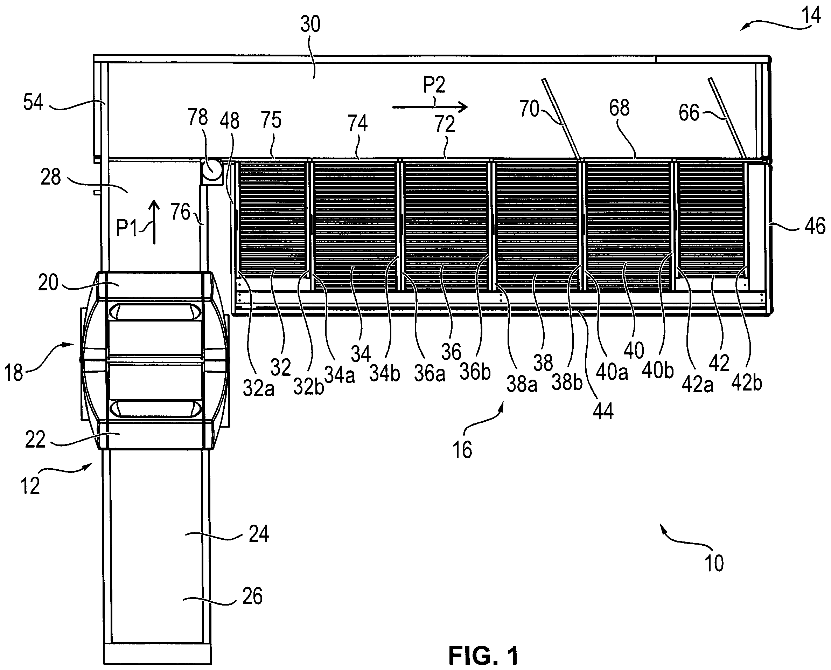

Figur 1 zeigt eine Draufsicht auf eine Kassensystemanordnung 10. Die Kassensystemanordnung 10 umfasst mehrere Module, nämlich eine Warenerfassungsvorrichtung 12, eine Transportvorrichtung 14 und eine Packvorrichtung 16. Die Module 12, 14, 16 sind mithilfe von als Schnittstellen ausgebildete lös- und wiederherstellbare Verbindungen miteinander zur Kassensystemanordnung 10 verbunden. Die Warenerfassungsvorrichtung 12 hat eine Scanneinheit 18 zum Erfassen von der der Scanneinheit 18 zugeführten Waren. Die Scanneinheit 18 umfasst im vorliegenden Ausführungsbeispiel zwei Barcodeleser 20, 22, die mithilfe von den Barcodelesern 20, 22 zugeordneten Spiegelanordnungen eine durch den Scannbereich transportierte Ware von allen Seiten abtasten. Bei anderen Ausführungsformen kann die Scanneinheit 18 auch nur einen einzigen Barcodeleser haben. Alternativ oder zusätzlich zu dem Barcodeleser oder den Barcodelesern 20, 22 kann die Scanneinheit 18 auch eine optische Kamera, eine Waage und/oder einen RFID-Leser zum Erfassen von auf Waren angebrachten RFID-Tags bzw. RFID-Transpondern umfassen. Mithilfe der Waage können Warenmengen erfasst oder das Gewicht von erfassten Waren mit einem für die jeweilige Ware voreingestellten Gewicht verglichen werden, so dass mithilfe des oder der Barcodeleser 20, 22 oder das mithilfe des RFID-Lesers ermittelte Ergebnis der Warenerfassung verifiziert werden. Die Kamera kann in gleicher Weise wie die Waage zum Verifizieren des mithilfe des Barcodeleser 20, 22 und/oder der RFID-Leser ermittelten Ergebnisse genutzt werden oder alternativ zum Erfassen der Ware selbst, wobei mithilfe der Kamera entweder ein auf der Ware aufgebrachter Barcode detektiert und ausgewertet wird oder mithilfe einer Bildanalyse die durch den Scannbereich der Scanneinheit 18 transportierte Ware erkannt und die erkannte Ware von der Kassensystemanordnung 10 registriert wird.

Die Warenerfassungsvorrichtung 12 hat einen Zuführbereich 24, in dem ein Kunde oder eine Servicekraft die von der Kassensystemanordnung 10 zu erfassenden Waren auf ein Vorlaufband 26 gelegt werden. Das Vorlaufband 26 ist ein angetriebenes, endloses, umlaufendes Transportband, mit dessen Hilfe die im Zuführbereich 24 zugeführten Waren in den Scannbereich der Scanneinheit 18 transportiert werden. Ferner umfasst die Warenerfassungsvorrichtung 12 ein Rücklaufband 28, das als angetriebenes, endloses, umlaufendes Transportband ausgeführt ist und das die von der Scanneinheit 18 erfassten Waren aus dem Scannbereich der Scanneinheit 18 heraustransportiert und einem Transportband 30 der Transportvorrichtung 14 zuführt. Die Transportrichtung P1 des Rücklaufbands 28 und die Transportrichtung P2 des Transportbandes 30 der Transportvorrichtung 14 verlaufen orthogonal zueinander, wobei die Transportrichtung P1 des Rücklaufbands 28 umkehrbar ist, um bei Bedarf nicht korrekt erfasste Waren zurück in den Scannbereich transportieren zu können. Besonders vorteilhaft ist es, wenn gleichzeitig die Transportrichtungen des Rücklaufbands 28 und des Vorlaufbands 26 umgekehrt werden, um einen Warenstau im Scannbereich der Scanneinheit 18 zu vermeiden.

Die Packvorrichtung 16 umfasst mehrere als Packmulden ausgeführte voneinander getrennte Warenaufnahmeeinheiten 32 bis 42. In Bezug auf die Transportrichtung P2 des Transportbands 30 sind die Warenaufnahmeeinheiten 32 bis 42 hintereinander angeordnet, wobei jede Warenaufnahmeeinheit 32 bis 42 als Untermodul der Packvorrichtung 16 ausgeführt ist, die über Verbindungselemente zu einem Gesamtmodul zusammengefasst sind. In Figur 1 sind Verbindungselemente 44, 46, 48 dargestellt, mit deren Hilfe die Untermodule 32 bis 42 zur Packvorrichtung 16 kombiniert sind. Die Warenaufnahmeeinheiten 32 bis 42 grenzen unmittelbar an eine Seite des Transportbands 30 der Transportvorrichtung 14 an und umfassen jeweils eine geneigte Ebene, die derart angeordnet ist, dass die Waren, die mit Hilfe von Umlenkelementen 66 bis 75 vom Transportband 30 in die jeweilige Warenaufnahmeeinheit 32 bis 42 geleitet werden, die geneigte Ebene der ausgewählten Warenaufnahmeeinheit hinabrutschen bis zu einem Entnahmebereich der Warenaufnahmeeinheit 32 bis 42, aus dem ein Kunde oder eine Servicekraft die Waren einfach entnehmen kann. Durch die geneigte Ebene werden die Waren ohne aktiven Antrieb vom Transportband 30 weg in den Warenentnahmebereich Warenaufnahmeeinheit 32, bis 42 geleitet. Die geneigte Ebene kann eine geschlossene Oberfläche aufweisen oder durch Rollen gebildet sein.

Die Warenaufnahmeeinheiten 32 bis 42 haben jeweils seitliche Trennwände 32a bis 42d, von denen zumindest ein Teil der zwischen den einzelnen Warenaufnahmeeinheiten angeordneten Trennwände 32b, 34a bis 42a bewegbar angeordnet sind, wobei durch Bewegen der zwischen zwei Warenaufnahmeeinheiten angeordneten Trennwände 32b, 34a; 34b, 36a; 36b, 36a; 38b, 40a; 40b, 42a das Aufnahmevolumen der Warenaufnahmeeinheiten veränderbar ist. Insbesondere kann der Warenaufnahmebereich von zwei benachbarten Warenaufnahmeeinheiten 32 bis 42 zu einem gemeinsamen Warenaufnahmebereich kombiniert werden. Dieses Kombinieren von Warenaufnahmebereichen mehrerer Warenaufnahmeeinheiten 32 bis 42 kann automatisch abhängig von der Menge der mithilfe der Scanneinheit 18 erfassten Waren einer Kassentransaktion erfolgen oder für einen Markt entsprechend dem gewöhnlichen Warenaufkommen voreingestellt werden.

Die Umlenkelemente 66 bis 75 sind bei der Kassensystemanordnung 10 mit der Packvorrichtung 16 verbunden. Die jeweilige Längsachse der Umlenkelemente 66 bis 75 ist und deren Längsachse in einer ersten Position parallel zur Transportrichtung P2 des Transportbands 30 ausgerichtet, so dass die Umlenkelemente 66 bis 75 in dieser ersten Position das Transportband 30 seitlich in Richtung der Warenaufnahmeeinheiten 32 bis 42 begrenzen, und den Zugang zu den Warenaufnahmeeinheiten 32 bis 42 versperren, so dass in diesem geschlossenen Zustand keine Waren vom Transportband 30 in den Warenaufnahmebereich der jeweiligen Warenaufnahmeeinheit 32 bis 42 gelangen können. In einer zweiten Position sind diese Umlenkelemente 66 bis 75 um ihre Drehachse gedreht angeordnet, sodass sie die Längsachse des Transportbandes 30 schräg oder orthogonal schneiden. Dadurch werden die vom Transportband 30 in Transportrichtung P2 transportierten Waren mithilfe des Umlenkelements 66 bis 75 in eine ausgewählte Warenaufnahmeeinheit gelenkt. Die Umlenkelemente 68, 72, 74, 75 sind in Figur 1 in der ersten geschlossenen Position und die Umlenkelemente 66, 70 in einer Zwischenposition zwischen der ersten Position und einer zweiten geöffneten Position dargestellt. Die Umlenkelemente 68 bis 75 fungieren als eine Art Weiche. Die Umlenkelemente 68 bis 75 können von einer Servicekraft oder einem Kunden manuell oder bei Vorsehen entsprechender Antriebe durch die Kassensystemanordnung 10 automatisch zwischen ihrer jeweiligen ersten und zweiten Position bewegt werden.

Die Kassensystemanordnung 10 hat eine Rolle 78, die in einem Übergangsbereich in einem durch die Transportbänder 28, 30 gebildeten Innenwinkel. Die Rolle 78 ist drehbar gelagert und dient zum Umlenken von Waren, die vom Rücklaufband 28 auf das Transportband 30 transportiert werden. Im vorliegenden Ausführungsbeispiel ist die Rolle 78 als passive drehbare Rolle ausgeführt. Bei anderen Ausführungsformen kann die Rolle 78 jedoch mithilfe einer Antriebseinheit angetrieben sein. Die Umlaufgeschwindigkeiten des Rücklaufbands 28, des Transportbands 30 und der Rolle 78 sind dann vorzugsweise gleich. Die Längsachse der Rolle 78 verläuft vorzugsweise orthogonal zur Transportrichtung P1 und zur Transportrichtung P2 und somit orthogonal zu den Transportebenen der Bänder 28, 30. Durch die Rolle 78 wird der Übergang von Waren vom Rücklaufband 28 auf das Transportband 30 erleichtert, so dass ein Warenstau im Übergangsbereich zwischen dem Rücklaufband 28 und dem Transportband 30 sowie Beschädigungen der Waren in diesem Übergangsbereich vermieden werden.

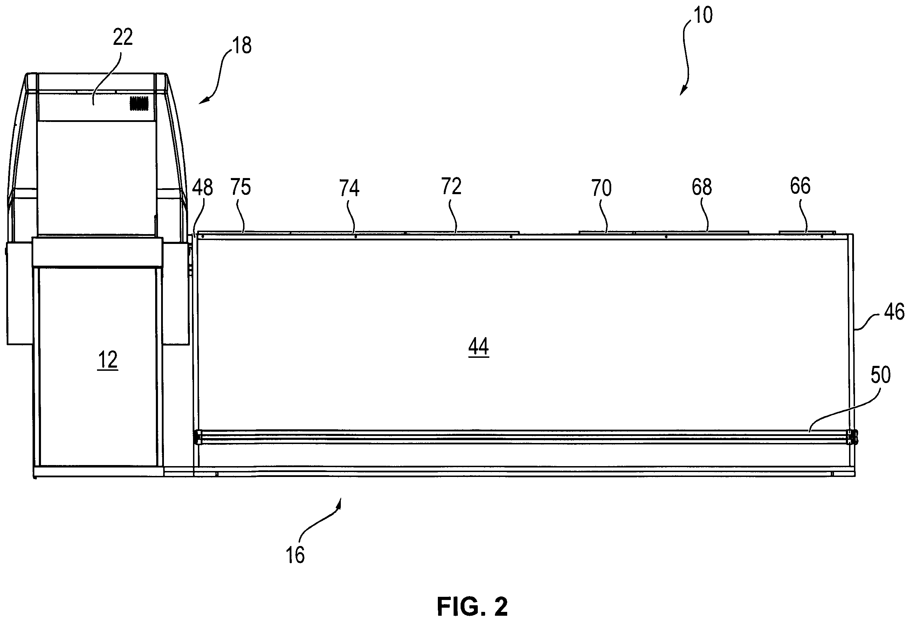

Figur 2 zeigt eine Vorderansicht der Kassensystemanordnung 10 nach Figur 1. Die Packvorrichtung 16 umfasst eine in Figur 2 dargestellte Stoßschutzleiste 50, die als Stoßschutz für Einkaufswagen dient, um Beschädigungen der Packvorrichtung 16 zu vermeiden.

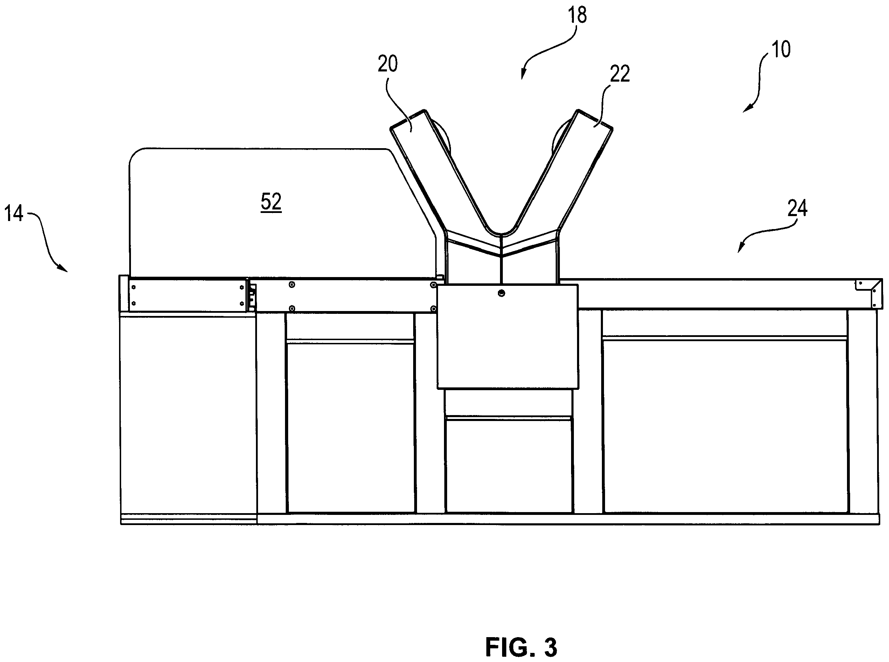

In Figur 3 ist eine Seitenansicht der Kassensystemanordnung 10 gezeigt, wobei im Übergangsbereich zwischen der Warenerfassungsvorrichtung 12 und der Transportvorrichtung 14 ein gemeinsames Trennelement 52 vorgesehen ist. Dieses Trennelement 52 dient insbesondere als Zugriffsschutz auf die von der Scanneinheit 18 der Warenerfassungsvorrichtung 12 bereits erfassten Waren. Wie in Figur 2 erkennbar, bilden die Scanner 20, 22 einen geschlossenen Bereich um das Vorlaufband 26 und um das Rücklaufband 28. Aus diesem Grund wird eine solche Scanneinheit 18 auch als Tunnelscanner bezeichnet.

Die Trennelement 52 kann bei anderen Ausführungsformen der Erfindung auch anders ausgeführt, beispielsweise aus einem ersten Trennelementsegment, das mit der Warenerfassungsvorrichtung 12 verbunden ist und einem zweiten Trennelementsegment, das mit der Transportvorrichtung 14 verbunden ist, sein. Jedoch kann bei dieser Ausführungsform oder bei anderen Ausführungsformen auch auf das Trennelement 52 verzichtet werden.

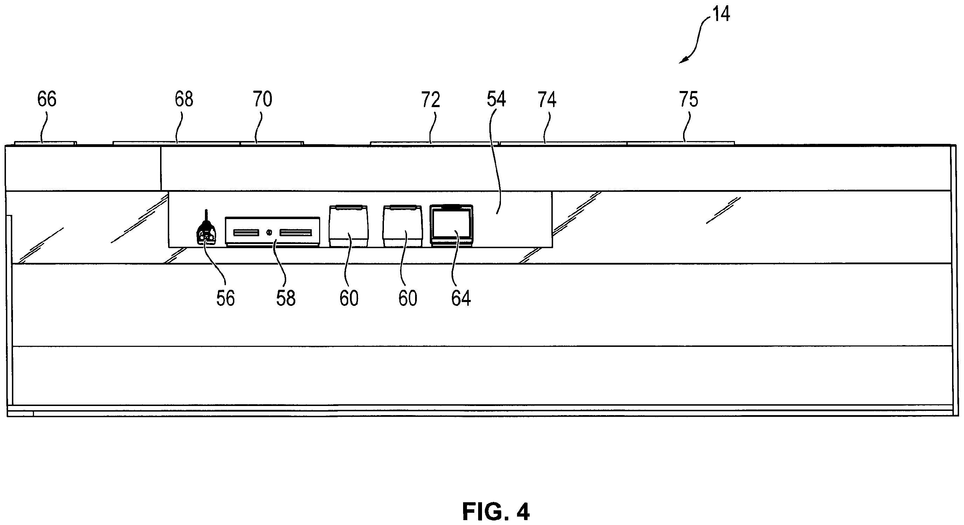

In Figur 4 ist eine Rückansicht der Transportvorrichtung 14 und der Packvorrichtung 16 dargestellt. In der Rückseite der Transportvorrichtung 14 ist ein Fach 54 vorgesehen, in dem im vorliegenden Ausführungsbeispiel ein Handscanner 56, eine Kassenlade 58, zwei Drucker 60, 62, wobei der Drucker 60 als Bondrucker und der Drucker 62 als Wertscheindrucker ausgeführt ist, und ein Display 64 angeordnet. Zusätzlich zu dem Display 64 kann die Kassensystemanordnung 10 ein nicht dargestelltes Kundendisplay sowie ein Terminal zum bargeldlosen Bezahlen und/oder Karteleseeinheiten zum Erfassen weiterer Karten, wie Rabattkarten, Kundenkarten o.ä. umfassen. Ferner sind in Figur 4 die bereits erwähnten Umlenkelemente 66 bis 75 gut sichtbar.

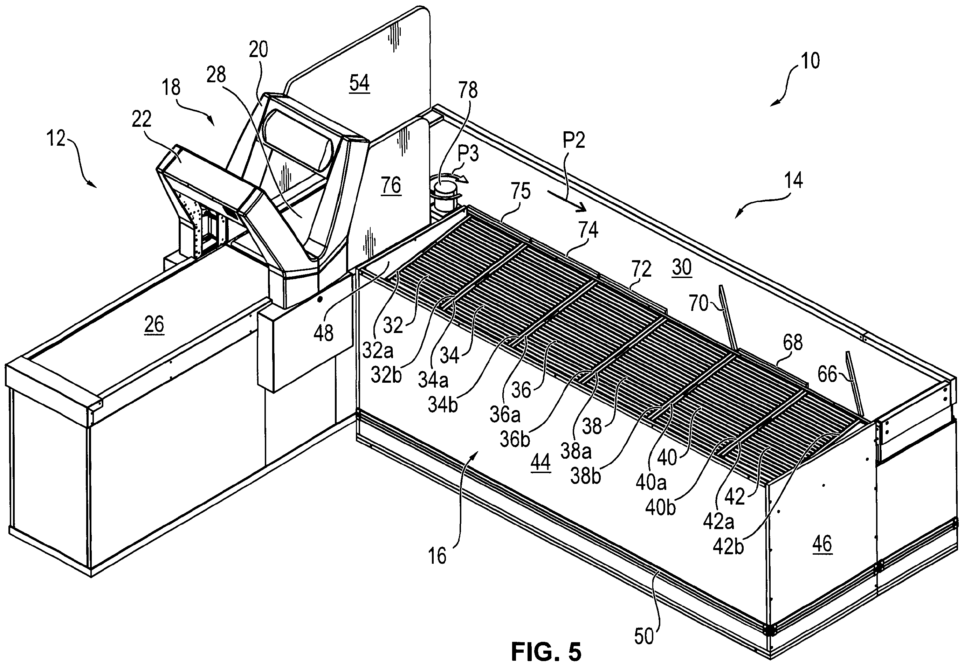

Figur 5 zeigt eine perspektivische Darstellung der Kassensystemanordnung 10, wobei in Figur 5 ein weiteres Trennelement 76 sichtbar ist, das in einem Teilbereich dem ersten Trennelement 54 gegenüberliegend angeordnet ist und insbesondere bei einem Warenstau im Bereich nach der Scanneinheit 18 ein seitliches Ausbrechen der Waren verhindert, so dass das Trennelement 54 verhindert, dass bereits gescannte Waren herunterfallen, und das Trennelement 76 verhindert, dass bereits gescannte Waren unbeabsichtigt in den Warenaufnahmebereich der Warenaufnahmeeinheit 32 gelangen.

In Figur 5 ist die Drehrichtung der Rolle 78 durch den Pfeil P3 angegeben, wobei einen Antrieb der Rolle 78 durch einen Kontakt mit den mithilfe des Rücklaufbands 28 und des Transportbands 30 transportierten Waren erfolgt. Alternativ kann die Rolle 78 auch aktiv mithilfe einer Antriebseinheit in Richtung des Pfeils P3 angetrieben werden.

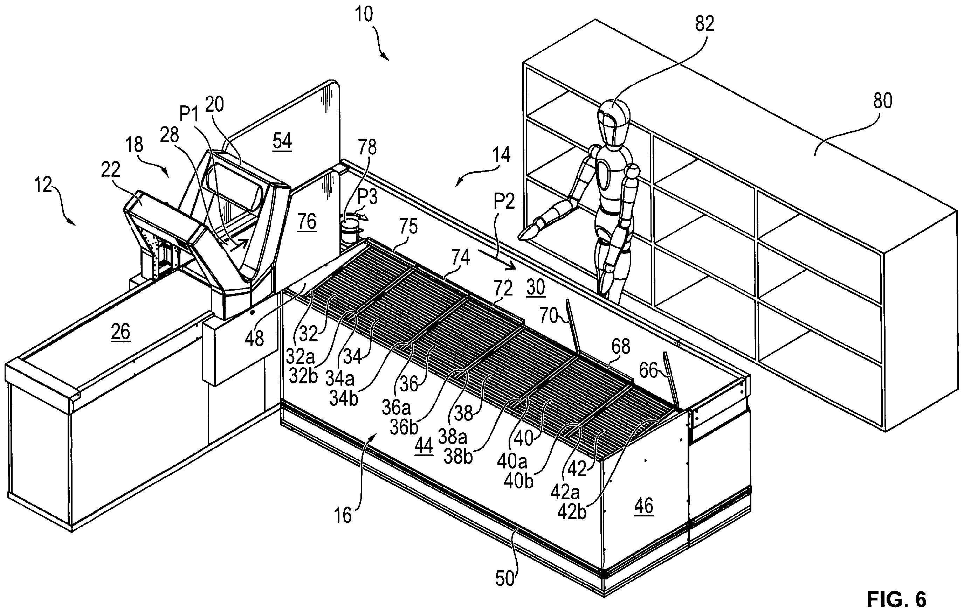

Figur 6 zeigt die perspektivische Darstellung des Kassensystems 10 nach Figur 5 zusammen mit einer schematisch dargestellten Servicekraft 82 und einem in einem Abstand zur Transportvorrichtung 14 angeordneten Regal 80, wobei sich die Servicekraft 82 im Bereich zwischen dem Regal 80 und der Transportvorrichtung 14 befindet. Die Servicekraft 82 beaufsichtigt sowohl die automatische Warenerfassung mithilfe der Scanneinheit 18, kontrolliert, dass alle Waren von der Scanneinheit 18 erfasst werden, insbesondere dass keine Waren in einem Einkaufswagen verbleiben, erfasst erforderlichenfalls von der Scanneinheit nicht erfasste Waren manuell nach, beispielsweise mithilfe des Handscanners 56, und wickelt den Bezahlvorgang mit dem Kunden ab. Alternativ zu der Serviceperson 82 und der manuellen Zahlungsabwicklung können bei anderen Ausführungsformen Kassensysteme auch Selbstbedienungsgeräte zum Abwickeln des Zahlungsvorgangs umfassen. Auch ist eine Variante denkbar, bei der die Servicekraft zwar den Bezahlvorgang begleitet oder überwacht und beispielsweise auch den Kassenbon an den Kunden übergibt, das Bargeldhandling oder der elektronische Bezahlvorgang selbst jedoch vom Kunden an einem entsprechenden Terminal selbst durchgeführt werden.

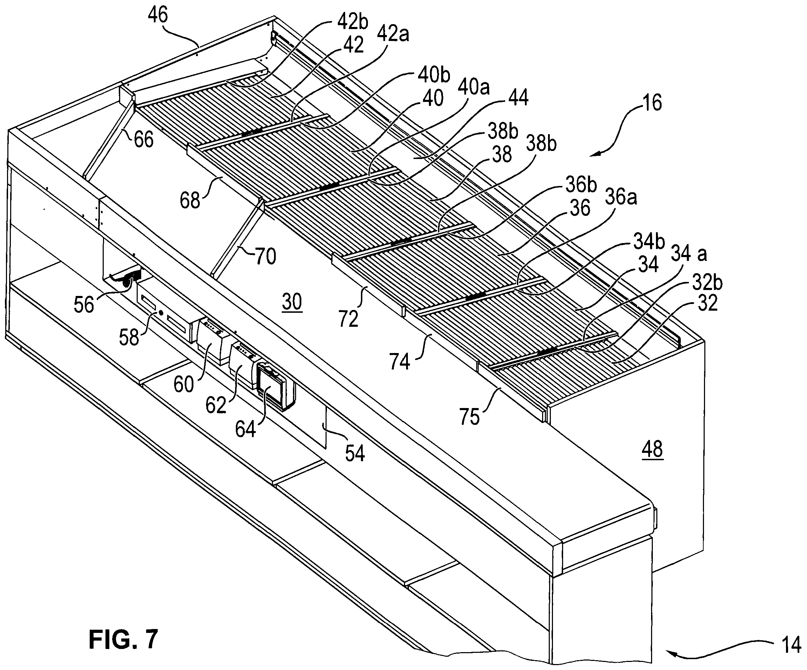

In Figur 7 ist eine perspektivische Darstellung der Transportvorrichtung 14 und der Packvorrichtung 16 des Kassensystems 10 gezeigt.

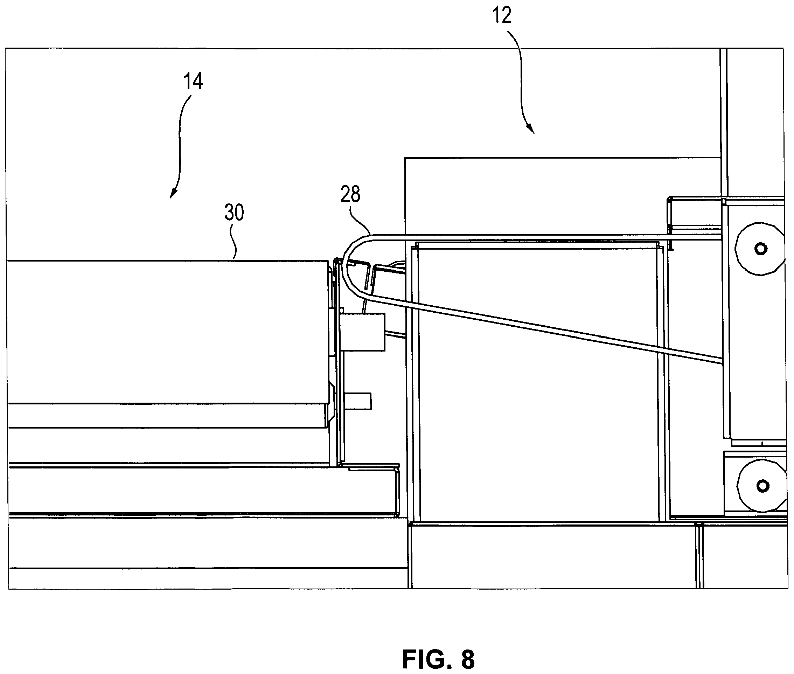

In Figur 8 ist ein Ausschnitt des Übergangs vom Rücklaufband 28 auf das Transportband 30 dargestellt. Wie in dieser Detailansicht gut sichtbar, ist die Transportebene des Rücklaufbandes 28 höher als die Transportebene des Transportbands 30. Besonders vorteilhaft ist es, wenn wie dies in Figur 8 gezeigt ist, die Höhendifferenz der Summe des Radius einer nicht dargestellten Umlenkrolle des Rücklaufbands 28 im Übergangsbereich zwischen dem Rücklaufband 28 und dem Transportband 30 und der Wanddicke des Transportbands 28 entspricht. Dadurch liegt der dem Transportband 30 nächste Punkt des Rücklaufbands 28 auf Höhe der Transportebene des Transportbands 30, so dass dadurch ein sehr geringer Spalt zwischen dem Rücklaufband 28 und dem Transportband 30 im Übergangsbereich zwischen diesen Transportbändern 28, 30 vorgesehen werden kann. Dadurch ist die Wahrscheinlichkeit verringert, dass Waren in diesen Spalt gelangen und einen Warenstau verursachen oder beschädigt werden.

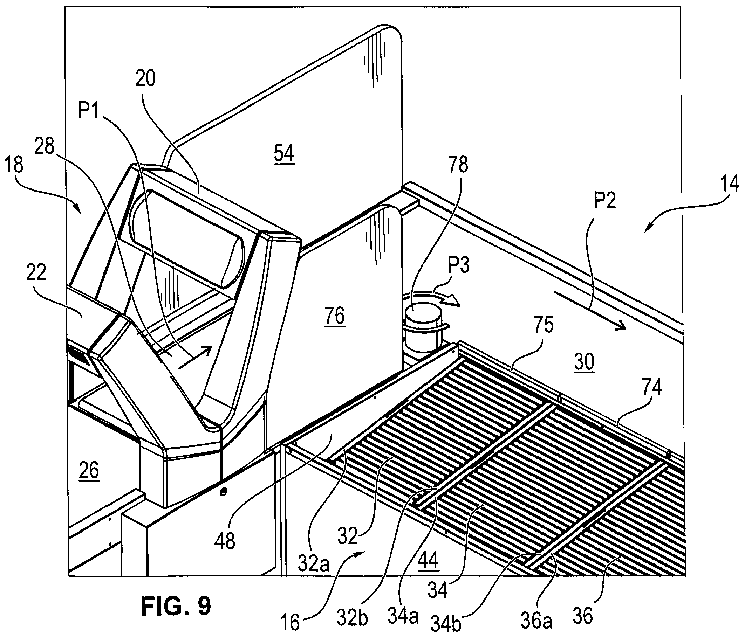

In Figur 9 ist eine perspektivische Darstellung eines Ausschnitts des Übergangsbereichs zwischen dem Rücklaufband 28 und dem Transportband 30 zusammen mit der Rolle 78 dargestellt.

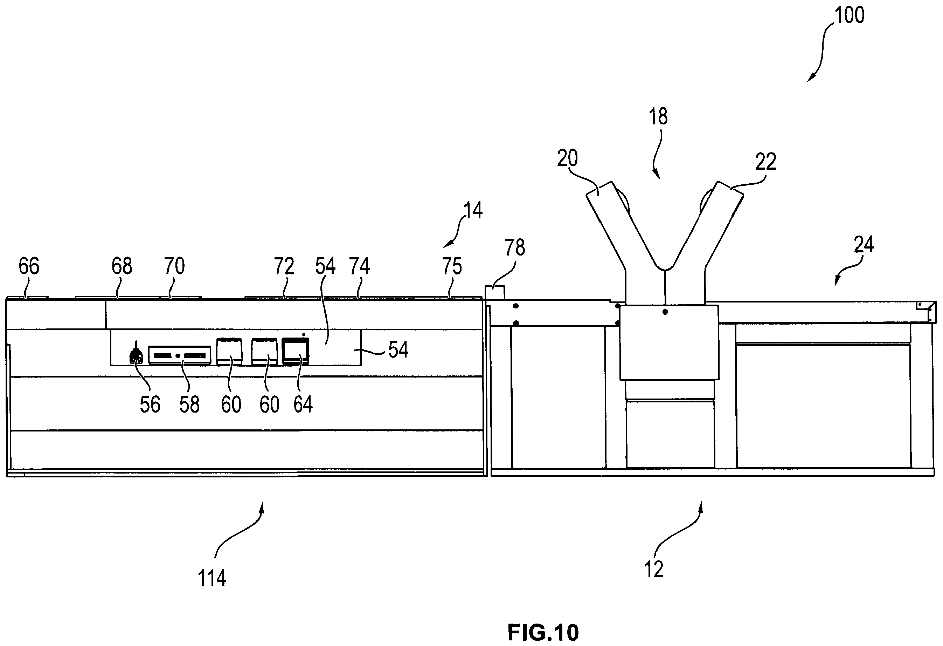

Figur 10 zeigt eine Seitenansicht einer Kassensystemanordnung 100 gemäß einer zweiten Ausführungsform. Die Kassensystemanordnung 100 umfasst dieselben Elemente der Kassensystemanordnung 10 nach Figur 1, wobei das Vorlaufband 26, das Rücklaufband 28 und ein Transportband 130 einer Transportvorrichtung 114 hintereinander angeordnet sind.

Die Transportvorrichtung 114 unterscheidet sich von der Transportvorrichtung 14 gemäß der ersten Ausführungsform lediglich in der Länge des Transportbandes 130. Die Länge des Transportbandes 130 ist um die Breite des Rücklaufpfades 28 kürzer als die Länge des Transportpfades 30 der ersten Ausführungsform. Ferner kann bei dieser zweiten Ausführungsform konnte auf die Umlenkrolle 76 verzichtet werden. Die mit der ersten Ausführungsform übereinstimmenden Elemente der Kassensystemanordnung 100 gemäß der zweiten Ausführungsform sind mit denselben Bezugszeichen bezeichnet. Im Unterschied zur ersten Ausführungsform ist auf die Trennelemente 52, 74 verzichtet worden. Jedoch können bei anderen Ausführungsformen auch bei einer Hintereinanderanordnung der Transportbänder 26, 28, 30 seitliche Trennelemente 52, 74, insbesondere seitlich neben dem Rücklaufband, vorgesehen werden.

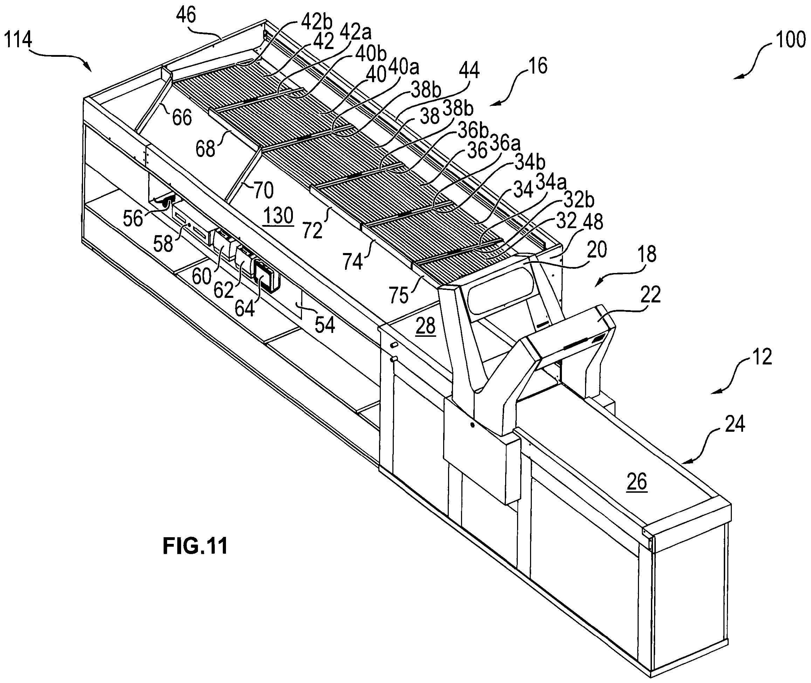

Figur 11 zeigt eine perspektivische Darstellung der Kassensystemanordnung 100 nach Figur 10.

### Bezugszeichenliste

10, 100 Kassensystemanordnung
12 Warenerfassungsvorrichtung
14,114 Transportvorrichtung
16 Packvorrichtung
18 Scanneinheit
20, 22 Scanner
24 Zuführbereich
26 Vorlaufband
28 Rücklaufband
30, 130 Transportband
P1, P2 Transportrichtung
32 bis 42 Warenaufnahmeeinheit
32a, 32b, 34a, 34b, 36a, 36b. 38a, 38b, 40a, 40b, 42a, 42b Trennwand
44, 46, 48 Verbindungselemente
50 Stoßleiste
52, 76 Trennelement
54 Fach
56 Handscanner
58 Kassenlade
60 Bondrucker
62 Gutscheindrucker
64 Anzeigeeinheit
66 bis 74 Weichenelement
78 drehbare Rolle
P3 Drehrichtung
80 Regal
82 Bedienperson

## Patentansprüche

1. Kassensystemanordnung,
mit einer Warenerfassungsvorrichtung (12) zum Erfassen von ausgewählten Waren, die einen Scanner (18, 20, 22) zum Erfassen der Waren und ein erstes Transportband (28) zum Transport der auf dem ersten Transportband (28) befindlichen Waren zumindest aus dem Scannbereich des Scanners (18, 20, 22) heraus umfasst, und
mit einer Packvorrichtung (16), die mindestens zwei voneinander getrennte Warenaufnahmeeinheiten (32 bis 42) zur Aufnahme der gescannten Waren zum Bereitstellen der Waren durch einen Kunden umfasst,
wobei das erste Transportband (28) derart angetrieben ist, dass auf ihm aufliegende Waren in einer erste Richtung (P1) transportiert werden, wobei zwischen dem ersten Transportband (28) und der Packvorrichtung (16) eine Transportvorrichtung (14, 114) vorgesehen ist, die ein zweites Transportband (30, 130) umfasst, mit dessen Hilfe die gescannten Waren nach Transport mit Hilfe des ersten Transportbandes (28) zu den Warenaufnahmeeinheiten (32 bis 42) der Packvorrichtung (16) transportierbar sind,
wobei das zweite Transportband (30, 130) derart angetrieben ist, dass auf ihm aufliegende Waren in einer zweite Richtung (P2) transportiert werden,
wobei die Packvorrichtung (16) entlang der zweiten Richtung (P2) des zweiten Transportbandes (30, 130) an einer Seite der Transportvorrichtung angeordnet ist,
wobei mit hilfe von Umlenkelementen (66) bis (75) vom zweites Transportband (30,130) in die jeweilige Warenaufnahmeeinheit (32 bis 42) die Waren geleitet werden, **dadurch gekennzeichnet, dass** die mindestens zwei Warenaufnahmeeinheiten (32 bis 42) der Packvorrichtung (16) durch eine bewegbare Trennwand (32a, 32b, 34a, 34b, 36a, 36b, 38a, 38b, 40a, 40b, 42a, 42b) voneinander getrennt sind, wobei durch Bewegen der Trennwand (32a, 32b, 34a, 34b, 36a, 36b. 38a, 38b, 40a, 40b, 42a, 42b) das Aufnahmevolumen der Warenaufnahmeeinheiten (32 bis 42) veränderbar sind, dass
die Umlenkelemente (66 bis 75) mit der Packvorrichtung (16) verbunden sind, und **dass** die Warenerfassungsvorrichtung (12), die Packvorrichtung (16) und die Transportvorrichtung (14, 114) als getrennte Module ausgebildet sind, die mit Hilfe von vorgesehen Schnittstellen miteinander über lös- und wiederherstellbare Verbindungen miteinander verbindbar sind.

2. Kassensystemanordnung nach Anspruch 1, **dadurch gekennzeichnet, dass** die Auscrichtung der Transportvorrichtung (14, 114) relativ zur Warenerfassungsvorrichtung 12 zum Verändern der Ausrichtung der ersten und der zweiten Richtung (P1, P2) relativ zueinander veränderbar ist.

3. Kassensystemanordnung nach Anspruch 2, **dadurch gekennzeichnet, dass** die Warenerfassungsvorrichtung (12) und die Transportvorrichtung (14,114) in einer ersten Betriebsposition derart angeordnet sind, dass die erste Richtung (P1) und die zweite Richtung (P2) gleichgerichtet sind.

4. Kassensystemanordnung nach Anspruch 2 oder 3, **dadurch gekennzeichnet, dass** die Warenerfassungsvorrichtung (12) und die Transportvorrichtung (14, 114) in einer zweiten Betriebsposition derart angeordnet sind, dass die erste Richtung (P1) und die zweite Richtung (P2) orthogonal zueinander sind.

5. Kassensystemanordnung nach einem der vorhergehenden Ansprüche, dass die Packvorrichtung (16) mehrere miteinander verbindbare und voneinander trennbare Untermodule (32 bis 42) umfasst, wobei jedes Untermodul (32 bis 42) mindestens eine Warenaufnahmeeinheit (12) umfasst.

6. Kassensystemanordnung nach einem der vorhergehenden Ansprüchen, **dadurch gekennzeichnet, dass** die Warenaufnahmeeinheiten (32 bis 42) bezogen auf die zweite Richtung (P2) hintereinander angeordnet sind.

7. Kassensystemanordnung nach einem der vorhergehenden Ansprüche, **dadurch gekennzeichnet, dass** der Scanner (18, 20, 22) als Tunnelscanner ausgebildet ist.

8. Kassensystemanordnung nach einem der vorhergehenden Ansprüchen, **dadurch gekennzeichnet, dass** das erste Transportband (28) und das zweite Transportband (30, 130) derart relativ zueinander angeordnet sind, dass sie sich in einem Übergangbereich, in dem die Waren von dem ersten Transportband (28) an das zweite Transportband (30, 130) übergeben werden, teilweise überlappen.

9. Kassensystemanordnung nach einem der vorhergehenden Ansprüchen, **dadurch gekennzeichnet, dass** das erste Transportband (28) und das zweite Transportband (30, 130) derart relativ zueinander angeordnet sind, dass in einem Übergangbereich, in dem die Waren von dem ersten Transportband (28) an das zweite Transportband (30) übergeben werden, das zweite Transportband (30) tiefer als das erste Transportband (28) angeordnet ist.

10. Kassensystemanordnung nach einem der vorhergehenden Ansprüche, dass das erste Transportband (28) und das zweite Transportband (30, 130) quer zueinander angeordnet sind, dass in dem Übergangsbereich im durch die Transportbänder (18, 30) gebildeten Innenwinkel mindestens eine um ihre Längsachse drehbar gelagerte Rolle (78) zum Umlenken der Waren bei der Übergabe von dem ersten Transportband (28) auf das zweite Transportband (30) vorgesehen ist.

11. Kassensystemanordnung nach einem der vorhergehenden Ansprüche, **dadurch gekennzeichnet, dass** die Warenerfassungsvorrichtung (12) und die Transportvorrichtung (14, 114) derart angeordnet sind, dass die Längsachsen des ersten Transportbandes (28) und des zweiten Transportbandes (130) gleichgerichtet sind, und dass der Scanner (18, 20, 22) am Ende des ersten Transportbandes (28) angeordnet ist, so dass die Waren direkt nach ihrer Erfassung durch den Scanner (18, 20, 22) von ersten Transportband 28 an das zweite Transportband (30) übergeben werden.

12. Kassensystemanordnung nach einem der vorhergehenden Ansprüche, **dadurch gekennzeichnet, dass** ein Regal (80) vorgesehen ist, dass das Regal (80) an einer ersten Längsseite der Transportvorrichtung (14, 114) angeordnet ist, und dass die Packvorrichtung (16) an einer der ersten Seite gegenüberliegenden zweiten Seite der Transportvorrichtung (14, 114) angeordnet ist.

## Claims

1. Point-of-sale system assembly,
comprising a product-sensing device (12) for sensing selected products, said product-sensing device comprising a scanner (18, 20, 22) for sensing the products and a first conveyor belt (28) for conveying the products located on the first conveyor belt (28) at least out of the scanning region of the scanner (18, 20, 22), and
comprising a packaging device (16) which comprises at least two product-receiving units (32 to 42) which are separate from one another and are intended for receiving the scanned products for making the products available through a customer,
wherein the first conveyor belt (28) is driven in such a manner that products resting thereon are conveyed in a first direction (P1), wherein a conveyor device (14, 114) is provided between the first conveyor belt (28) and the packaging device (16), said conveyor device comprising a second conveyor belt (30, 130), with the aid of which the scanned products after conveying with the aid of the first conveyor belt (28) can be conveyed to the product-receiving units (32 to 42) of the packaging device (16),
wherein the second conveyor belt (30, 130) is driven in such a manner that products resting thereon are conveyed in a second direction (P2),
wherein the packaging device (16) is arranged on a side of the conveyor device along the second direction (P2) of the second conveyor belt (30, 130),
wherein the products are conducted with the aid of deflecting elements (66) to (75) from the second conveyor belt (30, 130) into the respective product-receiving unit (32 to 42), **characterized in that** the at least two product-receiving units (32 to 42) of the packaging device (16) are separated from one another by a movable partition (32a, 32b, 34a, 34b, 36a, 36b, 38a, 38b, 40a, 40b, 42a, 42b), wherein the receiving volume of the product-receiving units (32 to 42) can be changed by moving the partition (32a, 32b, 34a, 34b, 36a, 36b, 38a, 38b, 40a, 40b, 42a, 42b), **in that** the deflecting elements (66 to 75) are connected to the packaging device (16), and **in that** the product-sensing device (12), the packaging device (16) and the conveyor device (14, 114) are designed as separate modules which are connectable to one another with the aid of designated intersections via releasable and reproducible connections.

2. Point-of-sale system assembly according to Claim 1, **characterized in that** the alignment of the conveyor device (14, 114) relative to the product-sensing device (12) can be changed in order to change the alignment of the first and the second direction (P1, P2) relative to each other.

3. Point-of-sale system assembly according to Claim 2, **characterized in that** the product-sensing device (12) and the conveyor device (14, 114) are arranged in a first operating position in such a manner that the first direction (P1) and the second direction (P2) are directed in the same direction.

4. Point-of-sale system assembly according to Claim 2 or 3, **characterized in that** the product-sensing device (12) and the conveyor device (14, 114) are arranged in a second operating position in such a manner that the first direction (P1) and the second direction (P2) are orthogonal with respect to each other.

5. Point-of-sale system assembly according to one of the preceding claims, in that the packaging device (16) comprises a plurality of submodules (32 to 42) which are connectable to one another and are separable from one another, wherein each submodule (32 to 42) comprises at least one product-receiving unit (12).

6. Point-of-sale system assembly according to one of the preceding claims, **characterized in that** the product-receiving units (32 to 42) are arranged one behind another with respect to the second direction (P2) .

7. Point-of-sale system assembly according to one of the preceding claims, **characterized in that** the scanner (18, 20, 22) is designed as a tunnel scanner.

8. Point-of-sale system assembly according to one of the preceding claims, **characterized in that** the first conveyor belt (28) and the second conveyor belt (30, 130) are arranged relative to each other in such a manner that they partially overlap in a transition region in which the products are transferred from the first conveyor belt (28) to the second conveyor belt (30, 130).

9. Point-of-sale system assembly according to one of the preceding claims, **characterized in that** the first conveyor belt (28) and the second conveyor belt (30, 130) are arranged relative to each other in such a manner that, in a transition region in which the products are transferred from the first conveyor belt (28) to the second conveyor belt (30), the second conveyor belt (30) is arranged lower than the first conveyor belt (28).

10. Point-of-sale system assembly according to one of the preceding claims, in that the first conveyor belt (28) and the second conveyor belt (30, 130) are arranged transversely with respect to each other, in that at least one roller (78) which is mounted rotatably about its longitudinal axis and is intended for deflecting the products during the transfer from the first conveyor belt (28) to the second conveyor belt (30) is provided in the transition region, in the internal angle formed by the conveyor belts (18, 30).

11. Point-of-sale system assembly according to one of the preceding claims, **characterized in that** the product-sensing device (12) and the conveyor device (14, 114) are arranged in such a manner that the longitudinal axes of the first conveyor belt (28) and of the second conveyor belt (130) are directed in the same direction, and **in that** the scanner (18, 20, 22) is arranged at the end of the first conveyor belt (28), and therefore the products, immediately after being sensed by the scanner (18, 20, 22), are transferred from the first conveyor belt (28) to the second conveyor belt (30).

12. Point-of-sale system assembly according to one of the preceding claims, **characterized in that** a shelf (80) is provided, **in that** the shelf (80) is arranged on a first longitudinal side of the conveyor device (14, 114), and **in that** the packaging device (16) is arranged on a second side of the conveyor device (14, 114) opposite the first side.

## Revendications

1. Arrangement de caisse enregistreuse,
doté d'un dispositif de saisie de marchandises (12) destiné à la saisie de marchandises choisies, lequel comprend un scanner (18, 20, 22) pour la saisie des marchandises et une première bande transporteuse (28) pour transporter les marchandises se trouvant sur la première bande transporteuse (28) au moins hors de la zone de scannage du scanner (18, 20, 22), et
doté d'un dispositif de conditionnement (16), lequel comprend au moins deux unités de réception de marchandise (32 à 42) séparées l'une de l'autre pour recevoir les marchandises scannées pour préparation des marchandises par un client,
dans lequel la première bande transporteuse (28) est entraînée de telle sorte que des marchandises reposant sur elle sont transportées dans une première direction (P1),
dans lequel un dispositif de transport (14, 114) est prévu entre la première bande transporteuse (28) et le dispositif de conditionnement (16), lequel comprend une deuxième bande transporteuse (30, 130), à l'aide de laquelle les marchandises scannées sont, après le transport à l'aide de la première bande transporteuse (28), transportables aux unités de réception de marchandise (32 à 42) du dispositif de conditionnement (16),
dans lequel la deuxième bande transporteuse (30, 130) est entraînée de telle sorte que des marchandises reposant sur elle sont transportées dans une deuxième direction (P2),
dans lequel le dispositif de conditionnement (16) est agencé au niveau d'un côté du dispositif de transport le long de la deuxième direction (P2) de la deuxième bande transporteuse (30, 130), dans lequel les marchandises sont conduites depuis la deuxième bande transporteuse (30, 130) vers l'unité de réception de marchandise (32 à 42) respective à l'aide d'éléments de déviation (66) à (75),
**caractérisé en ce que** les au moins deux unités de réception de marchandise (32 à 42) du dispositif de conditionnement (16) sont séparées l'une de l'autre par une paroi de séparation mobile (32a, 32b, 34a, 34b, 36a, 36b, 38a, 38b, 40a, 40b, 42a, 42b), dans lequel par déplacement de la paroi de séparation (32a, 32b, 34a, 34b, 36a, 36b, 38a, 38b, 40a, 40b, 42a, 42b) les volumes de réception des unités de réception de marchandise (32 à 42) sont modifiables,
**en ce que** les éléments de déviation (66 à 75) sont raccordés au dispositif de conditionnement (16), et **en ce que** le dispositif de saisie de marchandises (12), le dispositif de conditionnement (16) et le dispositif de transport (14, 114) sont conçus comme des modules séparés, lesquels sont raccordables l'un à l'autre par le biais de raccordements pouvant être débranchés et rebranchés à l'aide d'interfaces prévues.

2. Arrangement de caisse enregistreuse d'après la revendication 1, **caractérisé en ce que** l'orientation du dispositif de transport (14, 114) relativement au dispositif de saisie de marchandises (12) est variable afin de faire varier l'orientation des première et deuxième directions (P1, P2) l'une par rapport à l'autre.

3. Arrangement de caisse enregistreuse d'après la revendication 2, **caractérisé en ce que** le dispositif de saisie de marchandises (12) et le dispositif de transport (14, 114) sont agencés dans une première position de fonctionnement de telle sorte que la première direction (P1) et la deuxième direction (P2) sont alignées.

4. Arrangement de caisse enregistreuse d'après la revendication 2 ou 3, **caractérisé en ce que** le dispositif de saisie de marchandises (12) et le dispositif de transport (14, 114) sont agencés dans une deuxième position de fonctionnement de telle sorte que la première direction (P1) et la deuxième direction (P2) sont orthogonales l'une à l'autre.

5. Arrangement de caisse enregistreuse d'après l'une des revendications précédentes, en ce que le dispositif de conditionnement (16) comprend plusieurs sous-modules (32 à 42) raccordables l'un à l'autre et séparables l'un de l'autre, dans lequel chaque sous-module (32 à 42) comprend au moins une unité de réception de marchandise (12) .

6. Arrangement de caisse enregistreuse d'après l'une des revendications précédentes, **caractérisé en ce que** les unités de réception de marchandise (32 à 42) sont agencées l'une derrière l'autre par rapport à la deuxième direction (P2).

7. Arrangement de caisse enregistreuse d'après l'une des revendications précédentes, **caractérisé en ce que** le scanner (18, 20, 22) est réalisé comme tunnel scanner.

8. Arrangement de caisse enregistreuse d'après l'une des revendications précédentes, **caractérisé en ce que** la première bande transporteuse (28) et la deuxième bande transporteuse (30, 130) sont agencées relativement l'une à l'autre de telle sorte qu'elles se recouvrent partiellement dans une zone de transition où les marchandises sont transférées de la première bande transporteuse (28) à la deuxième bande transporteuse (30, 130) .

9. Arrangement de caisse enregistreuse d'après l'une des revendications précédentes, **caractérisé en ce que** la première bande transporteuse (28) et la deuxième bande transporteuse (30, 130) sont agencées relativement l'une à l'autre de telle sorte que la deuxième bande transporteuse (30) est agencée plus bas que la première bande transporteuse (28) dans une zone de transition où les marchandises sont transférées de la première bande transporteuse (28) à la deuxième bande transporteuse (30) .

10. Arrangement de caisse enregistreuse d'après l'une des revendications précédentes, en ce que la première bande transporteuse (28) et la deuxième bande transporteuse (30, 130) sont agencées transversalement l'une à l'autre, de sorte que dans la zone de transition dans l'angle intérieur formé par les bandes transporteuses (18, 30) au moins un rouleau (78) disposé en rotation autour de son axe longitudinal est prévu pour dévier les marchandises lors du transfert de la première bande transporteuse (28) à la deuxième bande transporteuse (30).

11. Arrangement de caisse enregistreuse d'après l'une des revendications précédentes, **caractérisé en ce que** le dispositif de saisie de marchandises (12) et le dispositif de transport (14, 114) sont agencés de telle sorte que les axes longitudinaux de la première bande transporteuse (28) et de la deuxième bande transporteuse (130) sont alignés, et **en ce que** le scanner (18, 20, 22) est agencé à l'extrémité de la première bande transporteuse (28), de sorte que les marchandises sont transférées de la première bande transporteuse (28) à la deuxième bande transporteuse (30) directement après leur saisie par le scanner (18, 20, 22).

12. Arrangement de caisse enregistreuse d'après l'une des revendications précédentes, **caractérisé en ce qu'**une étagère (80) est prévue, **en ce que** l'étagère (80) est agencée au niveau d'un premier côté longitudinal du dispositif de transport (14, 114), et **en ce que** le dispositif de conditionnement (16) est agencé au niveau d'un deuxième côté du dispositif de transport (14, 114) opposé au premier côté.
